Europäisches Patentamt

European Patent Office

Office européen des brevets

(19)

(11) Publication number: **0 321 306**
**A2**

## (12) EUROPEAN PATENT APPLICATION

(21) Application number: 88311987.7

(22) Date of filing: 16.12.88

(51) Int. Cl.⁴: **C 10 G 45/62**

(30) Priority: **18.12.87 US 135032**

(43) Date of publication of application:
**21.06.89 Bulletin 89/25**

(84) Designated Contracting States:
**BE DE ES FR GB IT NL**

(71) Applicant: **Exxon Research and Engineering Company**
**P.O.Box 390 180 Park Avenue**
**Florham Park New Jersey 07932 (US)**

(72) Inventor: **Davis, Stephen Mark**
**2014 Walnut Ridge**
**Baton Rouge Louisiana 70815 (US)**

**Hamner, Glen Porter**
**Deceased (US)**

(74) Representative: **Somers, Harold Arnold et al**
**ESSO Engineering (Europe) Ltd. Patents & Licences**
**Apex Tower High Street**
**New Malden Surrey KT3 4DJ (GB)**

(54) Wax isomerization process using palladium on fluorided amumina catalyst. .

(57) A method for increasing the yield of oil boiling in the 370°C + range produced by the isomerization of waxes by use of a palladium on fluorided alumina catalyst.

**Description**

## WAX ISOMERIZATION PROCESS USING PALLADIUM ON FLUORIDED ALUMINA CATALYST

Background of the Invention

The present invention is directed to a process for increasing the yield of lube oil base stock or blending stock produced by the isomerization of waxes. The process produces this increased yield by using as the catalyst palladium on fluorided alumina.

Description of the Related Art

The isomerization of wax to produce lube oil base stocks or blending stocks is the subject of an extensive body of literature.

U.S. Patent 2,817,693 produces oils from waxes by pretreating the catalyst with hydrogen at a pressure substantially above that used in the conversion process. The catalyst is one which contains about 1% or less by weight of platinum supported on alumina made by impregnating the alumina with an aqueous solution of chloroplatinic acid, drying and calcining. The catalyst may be pregnated by incorporation of chlorine or fluorine. The process can also use other isomerization catalysts.

U.S. Patent 2,668,866 teaches the isomerization of paraffin wax to produce oil using a catalyst. The catalyst is described as a supported platinum, palladium or nickel catalyst. The support is preferably alumina and is preferably treated with HCl or HF prior to incorporation of the platinum.

U.S. Patent 3,365,390 teaches a process for the production of lubricating oils by hydrocracking a heavy oil feed, separating hydrocracked wax and the hydrocracked lube oil portion of the products and hydroisomerizing the hydrocracked wax using an active reforming catalyst. The hydroisomerizing step uses as the catalyst a material comprising a noble metal, preferably platinum, or palladium associated with a porous refractory oxide carrier such as alumina which may be moderately acidic or acidified with a halide e.g. less than 1% chlorine and/or fluorine.

U.S. Patent 3,711,399 is directed to the selective hydrocracking and isomerization of paraffin hydrocarbons. The process utilizes a fluorided Group VII-B or VIII metal-alumina catalyst and a carbon oxide. The catalyst contains from 0.5 to 15.0 wt% chemically combined fluorine. Exemplary metals are rhenium, platinum, palladium, rhodium and ruthenium. The support is preferably alumina.

U.S. Patent 3,487,005 teaches the production of low pour point lubricating oils by what is called catalytic dewaxing. The process involves the steps of passing a waxy oil to catalytic hydrocracking denetrification to remove $H_2S$ and $NH_3$ and subjecting at least the higher boiling components to catalytic isomerization - hydrocracking in the presence of an unsulfided naphtha reforming catalyst having only moderate acidity. This isomerization - hydrocracking catalyst is desirably a noble metal, preferably platinum or palladium, associated with a porous refractory oxide carrier such as alumina. Moderate acidity is achieved by promoting the alumina with a small quantity of fluorine, about 2 wt%.

U.S. Patent 3,078,323 teaches an isomerization process. The process is directed to catalytic isomerization isomerization of $C_4$ to $C_7$ aliphatic paraffins. The patent teaches the importance of drying all or part of the paraffin and hydrogen charge to reduce water content to less than 35 parts by weight of water per million parts of hydrocarbon. The catalyst is a platinum type isomerization catalyst. The platinum type metal is selcted from platinum, palladium rhodium or the like.

G.B. 1,098,525 teaches the production of high quality lube oil and/or jet fuel from waxy petroleum fractions by controlling the degree of conversion of products boiling below 343°C; the greater the amount of charge stock converted to material boiling below 343°C per pass the higher the quality of the jet fuel and the dewaxed 343°C lube oil. Conversion is effected by isomerization over a platinum group metal hydroisomerization catalyst. Such catalyst comprises one or more of platinum, palladium and nickel, preferably on a support comprising eta alumina and especially gamma alumina (or bentonite, barite or faujasite) containing chlorine and/or fluorine. The preferred platinum group catalyst contains 0.1 to 1.0 wt% platinum and 0.1 to 10 wt% halogen on alumina. Halogen is chlorine or fluorine.

None of these references teach, suggest or imply that the fraction of lube oil produced during wax isomerization can be increased by using a palladium on fluorided alumina in place of the traditionally accepted standard catalyst, platinum on fluorided alumina.

Description of the Figure

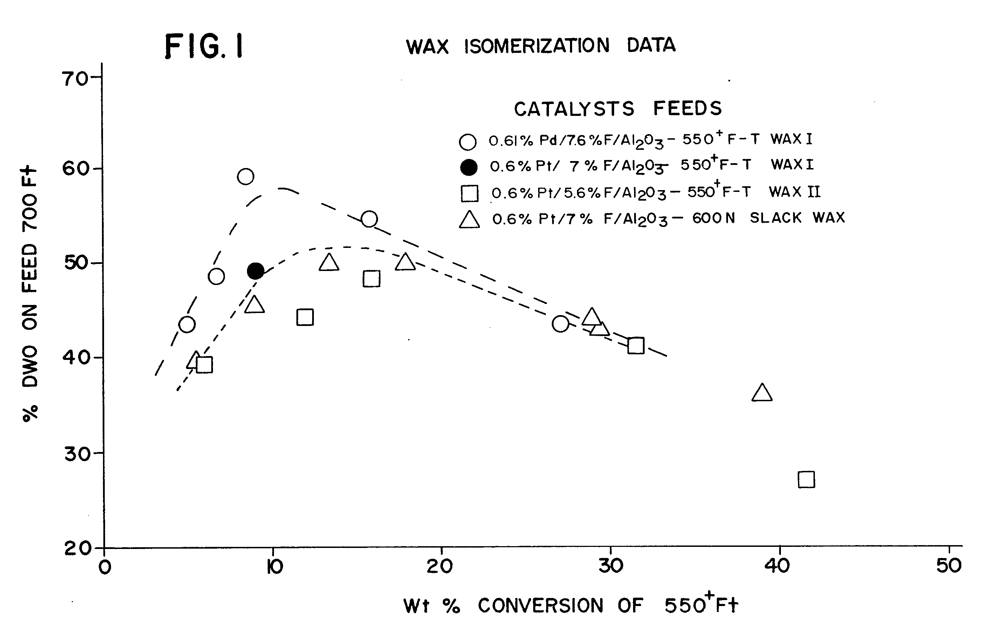

Figure 1 reports the dewaxed oil yield obtained using palladium on fluorided alumina as compared to various platinum on fluorided alumina catalysts.

Description of the Invention

It has ben discovered that the production of lube oil base stock or blending stock produced during the isomerization of waxes is increased when the isomerization procedure is practiced employing a catalyst consisting of palladium on fluorided alumina or material consisting predominantly (i.e. >50 wt%) of alumina.

The wax isomerization process is practiced on any waxy paraffinic material. These waxy materials can be derived from material sources as, for example, by the dewaxing of hydrocarbon oils. Such waxes, are described as slack waxes and contain 0 to 50% oil, typically about 5 to 25% oil as well as heteroatom compounds, e.g. compounds containing nitrogen and sulfur. Other paraffinic wax materials can be what have come to be described as synthetic wax. These synthetic waxes, obtained by, for example, the reaction of synthesis gases (CO and $H_2$) over Fischer-Tropsch catalysts are characterized as being micro crystalline high melting/boiling waxes which do not normally contain heteroatom compounds. In general, and for the purposes of this application the waxes are divided into 2 categories, (1) light paraffinic waxes boiling in the range of about 300 to 580°C and (2) heavy microwaxes having a substantial fraction (> 50%) boiling above about 600°C.

The natural slack waxes are generally hydrotreated over standard hydrotreating catalyst such as Co/Mo on alumina, Ni/Mo on alumina or Ni/Co/Mo on alumina under typical hydrotreating condition, e.g. temperature of 280 to 400°C, space velocity of 0.1 to 2.0 V/V/hr, pressure of from 500 to 3000 psig $H_2$ and hydrogen gas rates of from 500 to 5000 SCF/B. This hydrotreating is effected so as to reduce the hetero-atom levels in the wax feed to levels commonly accepted by the industry as tolerable for feeds to be exposed to isomerization catalysts. Such levels will typically be a nitrogen content of < 1 to 5 ppm and a sulfur content of < 1 to 20 ppm.

Slack waxes, especially those derived from the heavier oils such as bright stock oils should be deoiled prior to the hydrotreating step to reduce oil content to the range of 5 to 35% oil, preferably 5 to 25% oil.

Following any required or desired deoiling/hydrotreating the waxes are isomerized under fairly standard conditions; temperature between about 270 to 400°C, preferably 300 to 360°C, pressures of 500 to 3000 psi $H_2$, preferably 1000 to 1500 psi $H_2$, hydrogen gas rates of 1000 to 10,000 SCF/bbl and a space velocity in the range of 0.1 to 10 V/V/hr, preferably 1 to 2 V/V/hr.

In the present invention the isomerization process is practiced under a palladium on fluorided alumina or predominantly (i.e. > 50%) alumina catalyst. This catalyst consist of 0.1 to 5 wt%, preferably 0.1 to 1.0 wt%, most preferably 0.2 to 0.6 wt% palladium. The support is alumina or predominantly (i.e. > 50%) alumina, preferably alumina, most preferably eta or gamma alumina. This support is fluorided and contains from 1 to 11 wt% fluorine, preferably 2-8 wt% fluorine.

It is preferred that the isomerization reaction be conducted to a level of conversion such that about 40 percent or less, preferably 15 to 35 percent, most preferably 20 to 30 percent, unconverted wax remains in the fraction of the isomerizate sent to the dewaxing unit calculated as unconverted wax/(unconverted wax + dewaxed oil). The amount of unconverted wax in the 370°C⁺ oil fraction is taken to be the amount of wax removed or recovered from said oil fraction upon dewaxing. The total product from the isomerization (isom) unit is fractionated into a lube oil fraction boiling in the 330°C⁺ range, preferably in the 370°C⁺ range. This lube oil fraction is solvent dewaxed, preferably using 20/80 mixture of MEK/MIBK solvent, and (unconverted) wax is recycled to the isomerization unit.

Operating the isomerization unit at a level of conversion such that the oil fraction sent to the dewaxer contains about 40 percent or less wax, preferably 15 to 35 percent wax, most preferably 20 to 30 percent unconverted wax, goes against the conventional wisdom of isomerization operations. Lower levels of conversion, i.e. those levels at which a substantial portion of wax remains unconverted in the lube oil fraction sent to the dewaxer (and is subsequently recovered at the dewaxer for recycle), are typically seen as favoring maximization of lube oil production since operation at lower levels of conversion tend to favor the production of lube oil as compared to lower boiling fuels. The amount of wax present in the oil sent to the dewaxer normally should have no significant impact on the dewaxability of the oil or the pour point which can be achieved. While there may be a point beyond which so much wax is present as to be beyond the ability of the dewaxer to handle the volume of waxy oil, this traditionally is a materials-handling problem and does not effect the ability of the dewaxer to dewax oil to the desired pour point using conventional dewaxing techniques and temperatures. High levels of wax conversion, however, tend to produce larger quantities of fuels.

At low levels of conversion, difficulty is encountered in producing a lube oil having a pour point of at least -21°C from wax isomerate employing standard, conventional dewaxing procedures without resorting to "deep dewaxing" techniques. To produce a lube oil fraction which can be easily dewaxed to a pour point of at least -21°C it has been found that the isomerization unit should be run at a level of wax conversion such that about 40 percent and less, preferably 15 to 35 percent, most preferably 20 to 30 percent, unconverted wax is in the lube fraction sent to the dewaxer.

Following isomerization the isomerate is fractionated into a lubes cut and fuels cut, the lubes cut being identified as that fraction boiling in the 330°C⁺ range, preferably the 370°C⁺ range. This lubes fraction is then dewaxed to a pour point of about -21°C or lower. Dewaxing is accomplished by techniques which permit the recovery of unconverted wax, since in the process of the present invention this unconverted wax is recycled to the isomerization unit. It is preferred that this recycle wax be recycled to the main wax reservoir and be passed through the hydrotreating unit to remove any low quantities of entrained dewaxing solvent, which solvent could be detrimental to the isomerization catalyst. Alternatively, a separate stripper can be used to remove entrained dewaxing solvent or other contaminants. In either case the unconverted wax is recycled to the isomerization reactor. Solvent dewaxing is utilized and employs typical dewaxing solvent such as $C_3$ to $C_6$ ketones (e.g. methyl ethyl ketone, methyl isobutyl ketone and mixtures thereof), aromatic hydrocarbons (e.g. toluene), mixtures of ketones and aromatics (e.g. MEK/toluene) liquid, normally gaseous autorefrigerative hydrocarbons such as $C_3$-$C_4$ (i.e. propane, butane, mixtures thereof etc.), etc. at filter temperatures of -25 to -30°C.

The preferred solvent to dewax the isomerate under miscible conditions is a mixture of MEK/MIBK (20/80) used at a temperature in the range -25 to -30°C. Further, when dewaxing isomerate made from a microwax, e.g. Bright Stock slack wax, it has been found to be preferred that the fraction of the isomerate which is dewaxed is the "broad heart cut" identified as the fraction boiling between about 300 to 600°C, preferably 370 to 600°C. The heavy bottoms fraction (600°C⁺) contains appreciable wax so that they can also be recycled to the isomerization unit.

One desiring to maximize the production of lube oil having a viscosity in the 5.6 to 5.9 cSt/100°C range should practice the isomerization process under low hydrogen treat gas rate conditions, treat gas rates on the order to 500 to 5000 SCF/bbl, $H_2$, preferably 2000 to 4000 SCF/bbl, $H_2$, most preferably about 2000 to 3000 SCF/bbl,$H_2$.

It has also been found that prior to fractionation of the isomerate into various cuts and dewaxing said cuts, the total liquid product (TLP) from the isomerization unit can be advantageously treated in a second stage at mild conditions using the isomerization catalyst or simply noble Group VIII on alumina catalyst to reduce PNA and other contaminants in the isomerate and thus yield an oil of improved daylight stability.

In that embodiment the total isomerate is passed over a charge of the isomerization catalyst or over just a noble Group VIII metal of alumina catalyst. Mild conditions are used, e.g. a temperature in the range of about 170 to 270°C, preferably about 180 to 220°C, at pressures of about 300 to 1,500 psi $H_2$, preferably 500 to 1,000 psi $H_2$, a hydrogen gas rate of about 500 to 10,000 SCF/bbl, preferably 1,000 to 5,000 SCF/bbl and a flow velocity of about 0.25 to 10 V/V/hr, preferably about 1 to 4 V/V/hr. Higher temperatures may be employed if pressures in excess of 1,500 psi are used, but such high pressures may not be practical.

The total isomerate can be treated under these mild conditions in a separate, dedicated unit or the TLP from the isomerization reactor can be stored in tankage and subsequently passed through the aforementioned isomerization reactor under said mild conditions. It has been found to be unnecessary to fractionate the first stage product prior to this mild second stage treatment. Subjecting the whole product to this mild second stage treatment produces an oil product which upon subsequent fractionation and dewaxing yields a base oil exhibiting a high level of daylight stability and oxidation stability.

The invention will be better understood by reference to the following examples which either demonstrate the invention or are offered for comparison purposes.

EXAMPLE 1

Catalysts containing palladium supported on fluorided alumina were prepared according to the following procedures. Three 50 gr. portions of Cyanamid Powerformer alumina (TNA-7986) were impregnated to the point of incipient wetness with aqueous solutions of $Pd(NH_3)_4(NO_3)_2$. The concentrations were chosen to give about 0.6 wt.% Pd on catalysts A and B and 2.0 wt.% Pd on Catalyst C. The $Pd/Al_2O_3$ materials were air dried overnight at room temperature and subsequently dried in a vacuum oven at 100°C. Subsequently Catalyst A was treated with 45 cc of a solution containing 12 gr. of concentrated HF (ca. 48% by wt. HF). Three fluorine analyses were conducted on samples of this catalyst and fluorine contents of 6.14, 11.0 and 5.7 wt% F for an average fluorine content of 7.6 wt% F were reported. Catalysts B and C were treated with 38 cc solutions containing 9 gr. of $NH_4F$. For catalyst B, two fluorine analyses were conducted which reported fluorine contents of 6.56 and 8.5 wt% F, for an average of 7.5 wt% F, while for catalyst C, three analyses were conducted which reported fluorine contents of 6.07, 8.1 and 8.2 wt% F for an average of 7.5 wt% F. After drying at room temperature the $Pd/F/Al_2O_3$ catalysts were further dried for a period of about 16 hrs. in a vacuum oven maintained at 100°C. Chemical analysis revealed the following catalyst compositions.

| Catalyst | Pd-loading (Wt.%) | Average F-loading (Wt.%) |
|---|---|---|
| A | 0.61 | 7.6 |
| B | 0.54 | 7.5 |
| C | 1.76 | 7.5 |

The fluoride content of the catalyst can be determined in a number of ways.

One technique analyzes the fluorided catalysts using oxygen combustion methodology which is well established in the literature. Approximately 8-10 mgs of sample is mixed with 0.1 g benzoic acid and 1.2 gms of mineral oil in a stainless steel combustion capsule which is mounted in a 300 mL. Parr oxygen combustion bomb. The "sample" is purged of air and subsequently combusted under 30 Atms of pure oxygen. Combustion products are collected in 5 mL. of deionized water. Once the reaction has gone to completion (about 15 minutes), the absorbing solution is quantitatively transferred and made to fixed volume.

Fluoride concentration of the sample is determined by ion chromatography analysis of the combustion product solution. Calibration curves are prepared by combusting several concentrations of ethanolic KF standards (in the same manner as the sample) to obtain a 0-10 ppm calibration range. Fluoride concentration of the catalyst is calculated on an ignition-loss-free-basis by comparison of the sample solution response to that of the calibration curve. Ignition loss is determined on a separate sample heated to 800 degrees F for at least 2 hours. Ion chromatographic analysis uses standard anion conditions.

Another procedure employs the use of fluoride distillation with a titrimetric finish. Fluorides are converted into fluorosilicic acid ($H_2SiF_6$) by reaction with quartz in phosphoric acid medium, and distilled as such using super heated steam. This is the Willard-Winter-Tananaev distillation. It should be noted that the use of super heated, dry (rather than wet) steam is crucial in obtaining accurate results. Using a wet steam generator yielded results 10-20% lower. The collected fluorosilicic acid is titrated with standardized sodium hydroxide solution. A correction has to be made for the phosphoric acid which is also transferred by the steam. Fluoride data are reported on an ignition-loss-free-basis after determination of ignition loss on a sample heated to 400 degrees C for 1 hour.

The second and third analyses of catalysts A and C and the second analyses of catalyst B were performed using either the oxygen combustion technique or the fluoride distillation with titrimetric finish technique described above. These two techniques are believed to be more accurate and yield more consistent and reproduceable results than other techniques for the analysis of the fluorine content of catalysts.

## EXAMPLE 2

The three $Pd/F/Al_2O_3$ catalysts were evaluated for the conversion of normal hexane at atmospheric pressure and 350°C with an $H_2/C_6$ feed ratio of 5.4. The reaction studies were carried out in a micro-flow unit. For comparison a $Pt/F/Al_2O_3$ catalyst which contained 0.6 wt.% Pt and after three analyses was seen to contain 7.2, 9.0 and 10.1 wt% F for an average of 8.8 wt% F was also investigated under the same reaction conditions. The last two analyses were performed using either the oxygen combustion technique or the fluoride distillation with a titrimetric finish technique previously described. This platinum on fluorided alumina catalyst was made by the adsorption impregnation of HF onto a precalcined 0.6 pt/ $Al_2O_3$ 1/16 inch extrudate followed by drying in a vacuum over to 120°C for 16 hours. Low conversion, high space velocity conditions were chosen so that the intrinsic kinetics could be monitored in the absence of secondary reactions or diffusion limitations. The catalysts were all activated by $H_2$ treatment at 450°C for 1 hour.

Table 1 summarizes initial activities and product distributions for normal hexane conversion over the four catalysts. These results refer to data collected after one hour on stream at 350°C. It can be easily seen that all four catalysts showed similar reaction rates and very high isomerization selectivity. Closer examination reveals that the palladium catalysts showed reduced rates of hexane cracking to undesirable light gases. Methylcyclopentane production rates were also decreased as compared to the platinum catalyst. These results clearly tend to indicate that palladium can replace platinum without debiting isomerization performance.

### Table 1

#### Rates and Selectivities for Hexane Conversion over $Pd/F/Al_2O_3$ Catalysts

| Catalyst | Hexane Conversion [a] Rate (molec/gr. sec) | Product Distribution [b] Wt% | | |
|---|---|---|---|---|
| | | C5 | MCP | Isomers |
| A | $5.9 \times 10^{18}$ | 1.0 | - | 99.0 |
| B | $6.1 \times 10^{18}$ | 2.3 | - | 97.7 |
| C | $5.5 \times 10^{18}$ | 0.8 | 0.3 | 98.9 |
| $Pt/F/Al_2O_3$ | $6.0 \times 10^{18}$ | 3.1 | 1.7 | 95.2 |

(a) At 1 hr. on stream 350°C, 1 atm, $H_2/C_6 = 5.4$
(b) $C_5$ = sum of all $C_1$-$C_5$ gases

MCP = methylcyclopentane

Isomers = 1-methylpentane + 3 methylpentane + 2,2-dimethylbutane + 2,3-dimethylbutane

## EXAMPLE 3

Various palladium or platinum on fluorided alumina catalysts were evaluated for the isomerization of Fischer-Tropsch synthetic waxes or slack waxes obtained from the dewaxing of 600N oils into lube oils boiling in the 370°C+ range. Two Fischer-Tropsch waxes were employed FT-I and FT-II. FT-I was analyzed and found to contain about 15 wt% 550-700°F material while FT-II was analyzed and found to contain about 10 wt% 550-700°F material.

The palladium catalyst consisted of 0.61 wt% Pd on $F/A_2O_3$ which contained an average 7.6 wt% F. The catalyst corresponds to Catalyst A of Example 1 in terms of the procedure employed to deposit palladium and fluorine on the alumina. Following compounding, but before activation the catalyst was crushed and sized to a 14/35 mesh. Following sizing the catalyst was activated for about an hour at 340°C in flowing high purity hydrogen at atmospheric pressure.

This palladium catalyst was compared to three different platinum catalysts hereinafter referred to as comparison catalysts I, II and III.

5

Comparison catalyst I consisted of 0.6 wt% platinum on $F/Al_2O_3$. Three samples were analyzed for fluorine content and found to contain 6.1, 7.1 and 7.7 wt% F for an average of 7.0 wt% F. This catalyst was prepared by depositing fluorine using $NH_4F/HF$ at pH 4 onto a commercially available reforming catalyst which as obtained from the manufacturer as 1/16 inch -alumina extrudates contained 0.6 wt% platinum and about 1 wt% chlorine. Following deposition of the fluorine the catalyst was washed in water, dried at about 120°C for 16 hrs, and calcined in air at 400°C for 4 hrs.

The material was then crushed and sized to a 14/35 mesh size. Following sizing the catalyst was activated as above in pure hydrogen at 340°C.

Comparison Catalyst II consisted of 0.6 wt% platinum on 5.6 wt% $F/Al_2O_3$. The catalyst was made by fluoriding the above described commercial reforming catalyst using aqueous solution of HF. Following fluoriding the catalyst was washed, then dried at about 120°C for 16 hours, after which it was crushed and sized to a 14/35 mesh. Following sizing the catalyst was activated using the same procedure described above (heating in pure hydrogen at 340°C for about 2 hours).

Comparison Catalyst III consisted of 0.6 wt% Pt on fluorine/$Al_2O_3$. Three samples were analyzed for fluorine content and contained 6.1, 7.1 and 7.7 wt% F for an average 7.0 wt% F. This catalyst was prepared by fluoriding the commercial 1/16" extrudate reforming catalyst previously described using a solution of $NH_4F/HF$ at pH 4.

Following fluoriding the catalyst was washed then dried at 120°C for 16 hrs after which it was calcined in air at 400°C for 4 hrs. Prior to use the catalyst was activated in pure hydrogen at 340°C for 1 hour.

Isomerization was conducted in a small upflow pilot plant operated at 1000 PSIG $H_2$ inlet pressure, 656-688°F, 5000-7000 SCF/bbl, $H_2$, treat gas rate with LHSV = 0.45. Table 2 presents the results obtained using the palladium catalyst and comparison catalyst I.

TABLE 2

## PRODUCT YIELDS AND MATERIAL BALANCE DATA
## FOR HYDROISOMERIZATION OF 550+ F-T WAX[(A)]

| Catalyst | ------0.61 Pd/7.6 F/Al$_2$O$_3$----- | | | | | 0.6Pt/7F/Al$_2$O$_3$ | Feed |
|---|---|---|---|---|---|---|---|
| Temperature (°F) | 688 | 676 | 665 | 660 | 656 | 657 | |
| Cat Age End of Balance (hr.) | 89 | 179 | 244 | 309 | 404 | 272 | |
| Balance Period (hr.) | 89 | 90 | 65 | 65 | 95 | 150 | |
| Gas In (SCF/Bbl, H$_2$) | 7590 | 7490 | 5040 | 7370 | 6220 | 7130 | |
| Material Balance (%) | 104.0 | 100.1 | 102.4 | 103.0 | 103.5 | 102.4 | |
| Yield on Feed (wt.%) | | | | | | | |
| C$_4$- | 2.6 | 0.92 | 0.66 | 0.97 | 0.80 | 0.74 | — |
| C$_5$/320 | 7.4 | 5.8 | 0.78 | 1.15 | 0.96 | 1.58 | — |
| 320/550 | 17.6 | 9.3 | 7.3 | 4.9 | 3.5 | 7.0 | — |
| 550/700 | 32.5 | 28.5 | 23.9 | 21.8 | 20.2 | 23.6 | 14.5 |
| 700+ DWO | 36.9 | 46.6 | 50.5 | 41.4 | 37.0 | 41.8 | — |
| 700+ Wax | 3.6 | 9.0 | 16.9 | 30.0 | 37.5 | 25.4 | 85.5 |
| Conversion to 550- (wt.%) | 27.1 | 15.9 | 8.6 | 6.8 | 5.0 | 9.1 | — |
| DWO on Feed 700+ (wt.%) | 43.2 | 54.4 | 59.0 | 48.4 | 43.3 | 48.9 | — |
| i-C$_4$H$_4$/N-C$_4$H$_{10}$ Yield Ratio | 1.1 | 0.87 | 1.0 | 0.88 | 0.86 | 0.43 | — |
| Liq. Product API Gravity @ 60°F | 45.7 | 44.4 | 42.1 | 42.1 | 41.0 | 42.6 | 39.7 |

(a) @ 1000 PSIG, 0.45 LHSV

EP 0 321 306 A2

From Table 2 it is apparent that the palladium catalyst displayed outstanding isomerization performance. At essentially equivalent conversion, the yield of dewaxed oil appeared to be enhanced by up to 10% as compared to a leading platinum catalyst. Exceptional chemical activity for isomerization is also indicated by the magnitude of the i-$C_4$/n-$C_4$ yield ratios which were increased substantially using palladium catalyst as compared to platinum catalyst.

Figure 1 compares the 700°F$^+$ dewaxed oil (DWO) yields as a function of wax conversion to 550°F$^-$ hydrocarbon products for the palladium catalyst and comparison catalyst I, II and III. All isomerization runs were conducted under essentially similar reaction conditions.

Several features are important to note from Figure 1. The yield pattern of dewaxed oil as a function of 550$^+$ conversion is very similar for all the Pt/HF/$Al_2O_3$ catalysts on several different feeds. In these cases, a maximum DWO yield of 49$\pm$ 1% was detected for 550$^+$ conversion levels in the range of about 10-20%. Over the same conversion range, the dewaxed oil yield provided by the Pd/F/$Al_2O_3$ catalyst was increased by 5-10%. This change in DWO yield clearly represents a significant and unexpected improvement.

NOTES

● Temperature in °F is converted to equivalent °C by subtracting 32 then dividing by 1.8.
● 1 inch (") = 2.54 cms.
● 1 SCF = 28.319 liter.
● 1 bbl = 159 liter.
● Pressure in psi or gauge pressure in psig is converted to equivalent kPa by multiplying by 6.895.

**Claims**

1. A method for improving the yield of oil boiling in the lube oil base stock or blending stock range produced by the isomerization of wax over an isomerization catalyst, comprising conducting the wax isomerization procedure over a catalyst comprising or consisting of palladium on fluorided alumina or fluorided alumina containing support material.

2. The method of claim 1 wherein the wax which is isomerized is selected from slack waxes and synthetic waxes.

3. The method of claim 1 wherein the wax which is isomerized is either a light paraffinic wax boiling in the range of from about 300 to 580°C or a heavy microwax having a substantial fraction boiling above about 600°C.

4. The method of any one of claims 1 to 3 wherein the catalyst comprises or consist of from 0.1 to 5 wt% palladium deposited on alumina containing from 1 to 11 wt% fluorine.

5. The method of any one of claims 1 to 4 wherein the catalyst comprises or consists of from 0.1 to 1 wt% palladium deposited on alumina containing from 2-8 wt% fluorine.

6. The method of any one of claims 1 to 5 wherein the alumina is gamma-alumina.

7. The method of any one of claims 1 to 7 wherein the fluorided alumina-containing support is predominantly (>50%) alumina.

FIG. I

WAX ISOMERIZATION DATA

CATALYSTS FEEDS

○ 0.61% Pd/7.6%F/Al$_2$O$_3$ – 550$^+$F-T WAX I
● 0.6% Pt/ 7 % F/Al$_2$O$_3$ – 550$^+$F-T WAX I
□ 0.6% Pt/5.6%F/Al$_2$O$_3$ – 550$^+$F-T WAX II
△ 0.6% Pt/7% F/Al$_2$O$_3$ – 600 N SLACK WAX

% DWO ON FEED 700 F$^+$

Wt % CONVERSION OF 550$^+$F$^+$

EP 0 321 306 A2